## Europäisches Patentamt
## European Patent Office
## · Office européen des brevets

(11) Veröffentlichungsnummer: **0 355 550**
**A2**

(12) EUROPÄISCHE PATENTANMELDUNG

(21) Anmeldenummer: 89114539.3

(22) Anmeldetag: 07.08.89

(51) Int. Cl.⁴: **C01B 33/193**

(30) Priorität: 16.08.88 DE 3827779

(43) Veröffentlichungstag der Anmeldung:
28.02.90 Patentblatt 90/09

(84) Benannte Vertragsstaaten:
AT BE CH DE ES FR GB GR IT LI NL SE

(71) Anmelder: Henkel Kommanditgesellschaft auf Aktien
Henkelstrasse 67
D-4000 Düsseldorf 13(DE)

(72) Erfinder: Kretschmann, Josef, Dr.
Friedensstrasse 19
D-4018 Langenfeld(DE)
Erfinder: Carduck, Franz-Josef, Dr.
Landstrasse 18
D-5657 Haan(DE)
Erfinder: Wichelhaus, Winfried, Dr.
Stifterstrasse 3
D-4020 Mettmann(DE)
Erfinder: Köster, Klaus, Dr.
Hatzfelderstrasse.185 e
D-5600 Wuppertal 2(DE)

(54) ·Herstellung von Fällungskieselsäure und deren Verwendung.

(57) Offenbart wird ein Verfahren zur Herstellung von Fällungskieselsäure aus verdünnten Wasserglaslösungen, wobei das Wasserglas durch Umsetzung von Sand mit einer basischen Alkalimetallverbindung erhalten worden ist, unter weitgehender Verwertung von Reststoffen aus verdünnten basischen Abwasserlaugen bei diesem Herstellungsverfahren, mittels Fällung durch ein Kohlendioxid enthaltendes Medium, Filtration, Filtrationswäsche, Trocknung und Abtrennung, dadurch gekennzeichnet, daß

das anfallende Alkalicarbonat und Alkalihydrogencarbonat enthaltende wäßrige Filtrat gesammelt, gegebenenfalls mit dem Alkalicarbonat und Alkalihydrogencarbonat enthaltenden wäßrigen Filtrat der ersten Wäsche des kieselsäurehaltigen Filterrückstands zu einem Gesamtfiltrat vereinigt wird, wobei der. Gehalt an Alkalicarbonat und Alkalihydrogencarbonat, berechnet als Alkalihydrogencarbonat, 6 bis 12 Gew.-% beträgt,

wobei dieses Filtrat oder das Gesamtfiltrat in an sich bekannter Weise zu einer verdünnten wäßrigen Lösung der basischen Alkalimetallverbindung umgesetzt wird,

die verdünnte, eine wäßrige Alkalimetallverbindung enthaltende Lösung daraufhin auf die für die Umsetzung mit Sand erforderliche Konzentration eingedampft, gegebenenfalls unter Kristallisation und Calcinierung,

und schließlich die basische Alkalimetallverbindung in die Umsetzungsstufe zur Herstellung des Wasserglases zurückgeführt wird, sowie deren Verwendung als Füllstoff und Träger.

Xerox Copy Centre

SODAKREISLAUF BEI DER THERMISCHEN WASSERGLAS-HERSTELLUNG

Abb.1

## Herstellung von Fällungskieselsäure und deren Verwendung

Die vorliegende Erfindung betrifft Verfahren zur Herstellung von Fällungskieselsäure unter weitgehender Verwertung der anfallenden Reststoffe, also basischen Alkalimetalverbindungen, insbesondere aber Natriumcarbonat und/oder Natriumhydrogencarbonat. Die Erfindung betrifft außerdem die Verwendung der Fällungskieselsäure als Füllstoff und Träger.

Fällungskieselsäure wird gegenwärtig großtechnisch durch Umsetzung von Natronwasserglas mit Schwefelsäure und anschließende Filtration und Trocknung der Kieselsäure hergestellt (gemäß DE-PS-966 985). Als Natronwasserglas dient gelöstes Festglas, das seinerseits über einen Schmelzprozeß aus Sand und Soda gewonnen wird. Einen Überblick hierüber gibt "Ullmanns Encyklopädie der technischen Chemie, Verlag Chemie, 4. Aufl., Weinheim 1982, Bd. 21, S. 462 ff".

Bei dieser Überführung von Sand in aktive Kieselsäure fällt eine verdünnte Natriumsulfatlösung an.

Neben der Fällung mit Schwefelsäure wird Kieselsäure aus Wasserglas durch Kohlendioxid aus Rauchgasen gefällt (vgl. US-PS-3 709 980). Bei diesem Verfahren fällt statt Natriumsulfat eine wäßrige Natriumcarbonat- bzw. Natriumhydrogencarbonatlösung an, die jedoch nicht weiter aufgearbeitet wird. Die Kieselsäurefällung mittels Kohlensäure bzw. deren Anhydrid, ist weiterhin Gegenstand der DE-ASen 1 023 022, 1 049 834, 1 160 415 und 1 667 701 sowie der DE-PS 1 117 552.

Die beschriebenen Verfahren gemäß DE 996 985 bzw. US 3 709 980 werden diskontinuierlich durchgeführt.

Der oben zitierte Stand der Technik betrifft Anmeldungen der Jahre 1950 bis 1969. Ein Recycling von Reststoffen ist bei diesen Verfahren weder beschrieben noch als wünschenswert nahegelegt worden.

Für den Betrieb einer Anlage zur Herstellung von Fällungskieselsäure besteht ein Bedarf, ein Herstellungsverfahren für Fällungskieselsäure zu entwickeln, bei dem die Reststoffe weitgehend verwertet werden können, um gleichzeitig die Umwelt zu schonen und die knapper werdenden Rohstoff-Resourcen besser nutzen zu können.

Die vorliegende Erfindung betrifft demgemäß Verfahren zur Herstellung von Fällungskieselsäure aus verdünnten Wasserglaslösungen, wobei das Wasserglas durch Umsetzung von Sand mit einer basischen Alkalimetallverbindung erhalten worden ist, unter weitgehender Verwertung von Reststoffen aus verdünnten basischen Abwasserlaugen bei diesem Herstellungsverfahren, mittels Fällung durch ein Kohlendioxid enthaltendes Medium, Filtration, Filtrationswäsche, Trocknung und Abtrennung, dadurch gekennzeichnet, daß

das anfallende Alkalicarbonat und Alkalihydrogencarbonat enthaltende wäßrige Filtrat gesammelt, gegebenenfalls mit dem Alkalicarbonat und Alkalihydrogencarbonat enthaltenden wäßrigen Filtrat der ersten Wäsche des kieselsäurehaltigen Filterrückstands zu einem Gesamtfiltrat vereinigt wird, wobei der Gehalt an Alkalicarbonat und Alkalihydrogencarbonat, berechnet als Alkalihydrogencarbonat, 6 bis 12 Gew.-% beträgt, wobei dieses Filtrat teilweise nach Verdünnung und Umsetzung zu Alkalihydrogencarbonat in die Fällstufe zurückgeführt wird, während der Hauptanteil dieses Filtrates oder das Gesamtfiltrat in an sich bekannter Weise zu einer verdünnten wäßrigen Lösung der basischen Alkalimetallverbindung umgesetzt wird, die verdünnte, eine wäßrige Alkalimetallverbindung enthaltende Lösung daraufhin auf die für die Umsetzung mit Sand erforderliche Konzentration eingedampft, gegebenenfalls unter Kristallisation und Calcinierung, und schließlich die basische Alkalimetallverbindung in die Umsetzungsstufe zur Herstellung des Wasserglases zurückgeführt wird.

Vorzugsweise werden die Fällung der Kieselsäure, die Filtrationswäsche und die Trocknung sowie die Aufarbeitung der Filtrate kontinuierlich durchgeführt.

Vorzugsweise handelt es sich bei dem Kohlendioxid enthaltenden Medium um ein Rauchgas aus der Wasserglasherstellung.

Vorzugsweise beträgt der Gehalt an Alkalicarbonat und Alkalihydrogencarbonat, berechnet als Alkalihydrogencarbonat, im Filtrat oder im Gesamtfiltrat 8 bis 11 Gew.-%.

Bei einem Gehalt an basischer Alkalimetallverbindung von mehr als 12 Gew.-% kommt es zu einer gelartigen Abscheidung von Kieselsäure, die unerwünscht ist. Ist der Gehalt an basischer Alkalimetallverbindung schließlich geringer als 6 Gew.-%, so ist ein Recycling der Alkalimetallverbindung nicht wirtschaftlich.

Als basische Alkalimetallverbindung kommt insbesondere eine Natriumverbindung in Betracht. Besonders vorteilhaft ist Natriumcarbonat zur Herstellung von thermischem Wasserglas ($Na_2O$-$SiO_2$ 1 : 3,46). Weiterhin besonders vorteilhaft ist Natriumhydroxid in Form von 35 % Natronlauge zur Herstellung von hydrothermalem Wasserglas ($Na_2O$-$SiO_2$ 1 : 2).

Nach der ersten bevorzugten Ausführungsform wird als Reststoff Natriumcarbonat und/oder Natriumhydrogencarbonat verwertet.

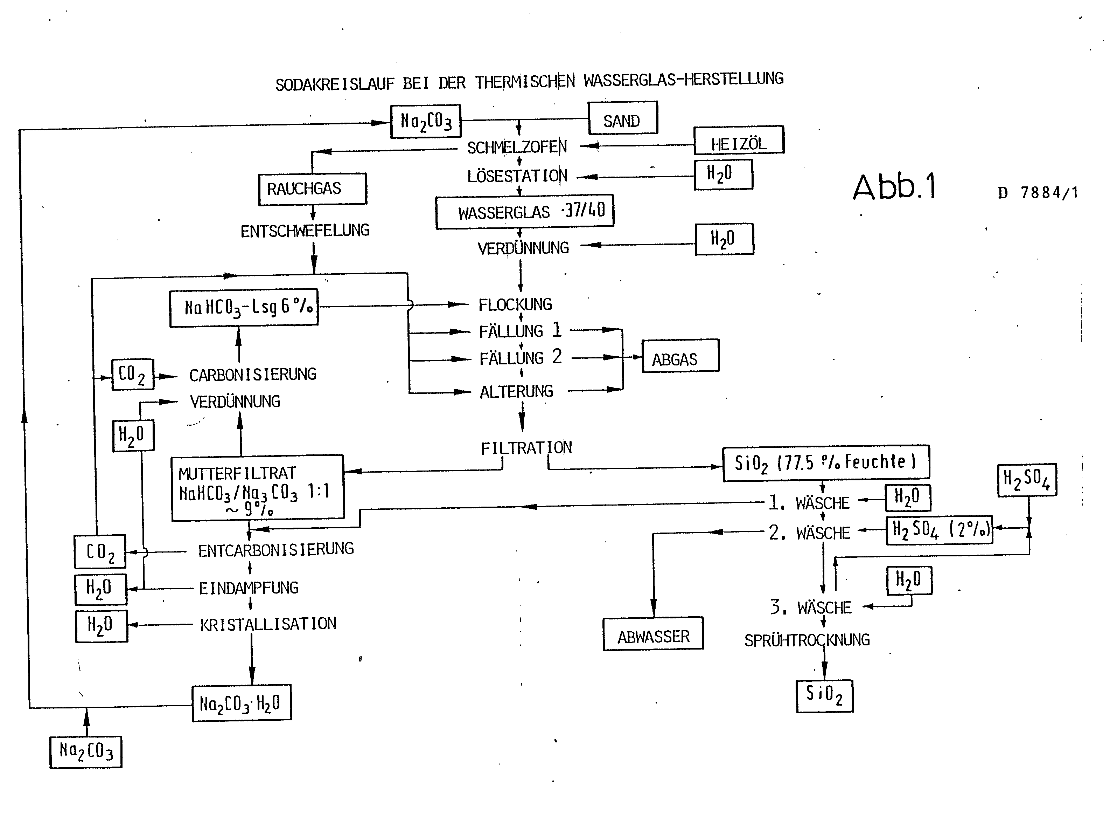

Für die Kieselsäurefällung aus Festglas-Lösungen ist die erste bevorzugte Ausführungsform des erfindungsgemäßen Verfahrens in Abb. 1 als Blockfließbild dargestellt:

Soda und Quarzsand werden nach dem üblichen Schmelz- und Löseverfahren zu Wasserglaslösung verarbietet. Die bei dem Schmelzprozeß anfallenden Rauchgase werden nach eventueller Reinigung zur Fällung von Kieselsäuren eingesetzt. Die Kieselsäure wird abfiltriert, gewaschen und nach den üblichen Verfahren z.B. durch Versprühen, getrocknet. Die Fällung und Filtration werden dabei so geführt, daß der Sodagehalt in der Mutterlauge größer als 6 %, vorzugsweise 8 bis 11 %, gerechnet als Natriumhydrogencarbonat, beträgt.

Die wäßrige Natriumhydrogencarbonatlösung wird mit Dampf entcarbonisiert oder alternativ mit Natronlauge zu Sodalösung neutralisiert. Das im ersten Falle sehr rein anfallende Kohlendioxid kann in die Füllstufe zurückgeführt werden. Die Soda-Lösung wird nach den üblichen Verfahren der Massenkristallisation eingedampft, filtriert und getrocknet und wird, je nach Betriebsweise der Wasserglasherstellung, direkt oder nach vorhergehender Calcinierung zu Schwersoda in den Schmelzprozeß zurückgeführt. Ein Teil der Mutterlauge wird nach Verdünnung zur Flockung bei der Kieselsäurefällung eingesetzt. Nach dem beschriebenen Verfahren können bis zu 90 % der bei der Festglasherstellung eingesetzten Sodamenge zurückgewonnen werden. Dementsprechend vermindert sich der Anteil an Calciumchlorid-, Natriumchlorid- und Natriumsulfat- bzw. Natriumcarbonat-Reststoffen beim Gesamtprozeß.

Für die technisch sinnvolle und wirtschaftliche Führung des Sodakreislaufes gemäß der ersten bevorzugten Ausführungsform des erfindungsgemäßen Verfahrens, insbesondere für die Sodarückgewinnung aus der Mutterlauge, ist ein kontinuierlicher Prozeß zur Filtration, vorzugsweise auch zur Fällung der Kieselsäure, erforderlich.

Die Fällung der Kieselsäure erfolgt beispielsweise in einer 4-stufigen Rührkesselkaskade, wobei die Wasserglaslösung nach Verdünnen mit Wasser auf ca. 30 % $Na_2O$-$(SiO_2)_{3,48}$ gleichmäßig auf die ersten drei Kessel verteilt wird. Im ersten Kessel erfolgt durch Zusatz von 6 %igem wäßrigem Natriumhydrogencarbonate eine Flockung, die Fällung erfolgt durch Rauchgaseinleitung in die Kessel 2 bis 4. Die anfallende Suspension wird bei 50 bis 80 °C vorzugsweise auf einem Vakuumbandfilter filtriert, mit Wasser gewaschen, verd. Schwefelsäure neutralgestellt und mit Wasser nachgewaschen. In der Mutterlauge und dem ersten Waschfiltrat liegen Soda und Natriumhydrogencarbonat im Verhältnis 2 : 1 bis 1 : 2 und einer Gesamtkonzentration (berechnet als $NaHCO_3$) von 8,5 bis 10 % vor. Das Filtrat enthält ca. 90 % der bei der Wasserglasherstellung eingesetzten basischen Verbindung. Die Filtrate der Schwefelsäurewäsche und 2. Wasserwäsche werden kanalisiert. Die Kieselsäure erreicht nach Sprühtrocknung handelsübliche Füllstoffqualität, vergleichbar mit Ultrasil VN3 (vgl. Ullmann, loc. cit., S. 467).

Die Soda- und Hydrogencarbonat-haltigen Filtrate werden in einer Vakuumkolonne unter Dampfzufuhr entcarbonisiert und in einer 2-stufigen Eindampf- und Vakuumkristallisationsstufe abgetrennt, zentrifugiert und getrocknet. Die Aufarbeitung des Sodas aus einer verdünnten Lösung entspricht dabei dem Stand der Technik. Alternativ zur Entcarbonisierung kann auch das Restnatron in der Sodalösung mit Natronlauge neutralisiert und wie oben beschrieben als Soda isoliert werden. Das Soda wird eventuell nach Calcinierung unter Ergänzung der Verluste aus Filtration und Aufarbeitung (ca. 15 %) in den Schmelzproezß zur Wasserglasherstellung zurückgeführt.

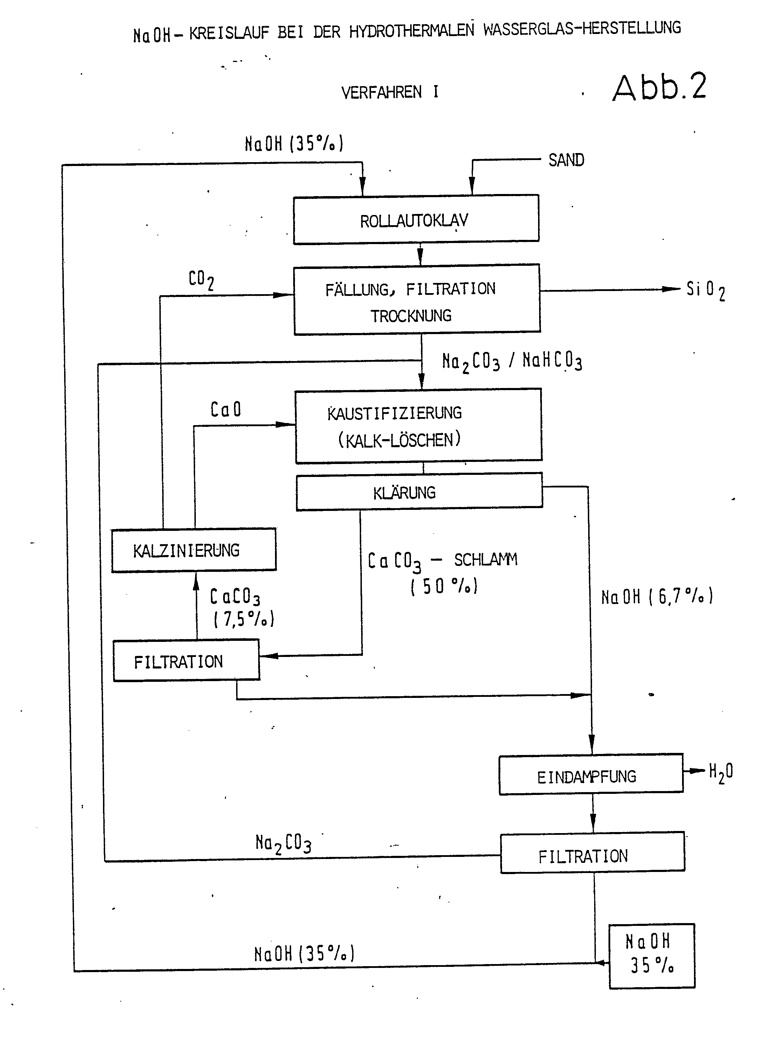

Analog zum oben beschriebenen Verfahren zum Soda-Kreislauf bei der Herstellung von Kieselsäure aus thermischem Wasserglas, läßt sich, gemäß der zweiten bevorzugten Ausführungsform des erfindungsgemäßen Verfahrens, auch aus Hydrothermalglas Kieselsäure unter weitgehender Rückgewinnung der basischen Alkaliverbindung (Natriumhydroxid) gewinnen (Abb. 2).

Die natronhaltigen und/oder sodahaltigen Filtrate aus der Kieselsäurefiltration werden mit verdünnter Natronlauge zu Sodalösung neutralisiert. Diese Lösung wird mit frisch gebranntem Calciumoxid zu Kalkmilch (wäßrige Calciumhydroxiddispersion) verrührt und bei 80 bis 90 °C zu Natronlauge und Calciumcarbonat kaustifiziert. Nach Absetzen des Calciumcarbonats wird der Schlaum filtriert, gewaschen, entwässert und anschließend calciniert. Calciumoxid gelangt in die Kaustifizierstufe, Kohlendioxid in die Kieselsäurefällung zurück.

Die aus dem Calciumcarbonat-Eindicker anfallende 7 %ige Natriumhydroxidlösung wird auf die für den hydrothermalen Sandaufschluß erforderliche Konzentration (35 %) eingedampft. Die Kaustifizierung von Soda zur Natronlaugeherstellung ist ein in der Technik lange bekanntes Verfahren. Wie bei dem Sodakreislauf bei der Fällungskieselsäureherstellung aus thermischem Wasserglas, stellt auch die Kombination der Rauchgasfällung von Siliciumdioxid mit Natronlaugekreislauf eine rohstoffsparende, umweltschonende Alternative zu den Verfahren nach dem Stand der Technik dar. Es können ca. 80 % der eingesetzten Natronlauge zurückgewonnen werden.

Schließlich betrifft die Erfindung die Verwendung der nach dem oben beschriebenen Herstellungsverfahren erzeugten Fällungskieselsäuren als Füllstoffe, insbesondere zur Verstärkung von Elastomeren, als

3

Träger von Flüssigkeiten, als Filterhilfsstoff für Feststoffe, zur Mattierung von Lacken und Druckfarben und als Flammschutzmittel.

Die Erfindung wird im Folgenden durch Beispiele erläutert.

## Beispiel 1

In einem Rührkessel von 2 m³ Nenninhalt werden 1.100 kg einer 6 %igen $NaHCO_3$-Lösung vorgelegt. In der Lösung werden 200 Nm³/h eines Gasgemisches aus Kohlendioxid und Stickstoff im Volumenverhältnis von 1 : 4 dispergiert und innerhalb von 10 min 190 kg einer Wasserglaslösung (28 %ig, $SiO_2$-$Na_2O$ 3,46:1), die 21,3 Gew.-% $SiO_2$ und 6,3 Gew.-% $Na_2O$ enthielt, eingebracht. Die Mischung wird mittels Wasserdampf auf 40 °C erwärmt und weitere 570 kg Wasserglaslösung eingemischt, wobei die Temperatur auf 63 °C erhöht wurde. Nach kurzen Aufheizen auf 80 °C wurde die entstandene Suspension 40 min bei 65 °C unter ständiger Begasung gerührt. Man erhielt eine Suspension aus feinteiliger Kieselsäure und einer wäßrigen Alkalicarbonat-Lösung folgender Zusammensetzung: $SiO_2$ = 8,7 %, $Na_2O$ = 3,9 %, $CO_2$ = 4,5 %, $H_2O$ = 82,8 %.

Die Suspension wurde auf einem Vakuumbandfilter filtriert, mit Wasser und mit 5 %iger Schwefelsäure gewaschen und auf pH 5 eingestellt und anschließend nochmals mit Wasser nachgewaschen. Nach Trocknung wurden für die Kieselsäure folgende Kenndaten ermittelt, die denen handelsüblicher Fällungskieselsäuren entsprechen:

Stampfdichte 200 g/l, Sekundärteilchen 17 μm, Siebrückstand > 63 μm 15 %, Naß-Siebrückstand 18,5 %, Leitfähigkeit 275 μS, $SiO_2$ = 98 %, $Na_2O$ = 1,0 %, $SO_3$ = 0,5 %.

In der Mutterlauge und dem 1. Waschfiltrat fallen 92 % des eingesetzten Alkalis in Form einer Lösung mit einem Gehalt von 3,5 % Natriumcarbonat und 4,0 % Natriumhydrogencarbonat (entspr. 9,4 % als gesamt $NaHCO_3$) an.

Des Filtrat kann nach Abtrennung und Verdünnung eines Anteils zur Flockung (6 %ige $NaHCO_3$-Lösung) durch Decarbonisierung, Massenkristallisation, Trennung und Trocknung als Soda bei der Wasserglasherstellung eingesetzt werden, wobei die Aufarbeitungskosten für dieses Soda bei einer Anlagenleistung von 20.000 t Fällungskieselsäure ca. 15 % unter dem Preis für technisches Soda liegen (Stand 1988).

## Beispiel 2

In einer 4-stufigen Rührkesselkaskade (Kesselvolumen 1:4,5:4,5:20) werden in den 1. Kessel stündlich 220 l 6 % $NaHCO_3$-Lösung und 35 l verd. Wasserglaslösung (Wasserglas 37/40-$Na_2O$:$SiO_2$ = 1:3,46), im 2. Kessel 55 l Wasserglaslösung und in den 3. Kessel 30 l Wasserglaslösung eingespeist. Die Kessel 2 - 4 werden mit eienr $CO_2$/$N_2$-Gasmischung (30 Vol % $CO_2$) begast. Die aus dem 4. Kessel austretende Suspension mit einem Kieselsäuregehalt von 9,1 % wird bei 80 °C auf einem Vakuumbandfilter filtriert, der Filterkuchen (135 kg/h) mit Wasser gewaschen, mit 5 %iger Schwefelsäure auf pH 5 eingestellt und mit Wasser nachgewaschen.

Die Fällungskieselsäure entspricht bezüglich ihrer physiko-chemischen und ihrer Füllstoffeigenschaften in Kautschukmischungen den Marktprodukten, wie den nachfolgenden Tabellen 1 und 2 zu entnehmen ist.

Aus der Filtration (1. und 2. Zone) fällt ein Filtrat an, das 90 % des eingesetzten Alkalis in Form einer auf $NaHCO_3$ bezogenen 9,5 %igen Lösung ($NaHCO_3$ = $Na_2CO_3$ 1:1,5) enthält. Diese Konzentration gestattet eine wirtschaftlichere Wiederaufarbeitung und Rückführung der Alkalikomponente in den Wasserglasherstellungsprozeß.

## Beispiel 3

In der in Beispiel 2 beschriebenen Anlage wird aus einer Lösung aus hydrothermalem Wasserglas (11,8 % $Na_2O_3$, 23,8 % $SiO_2$) Kieselsäure mit $CO_2$-haltigem Gas gefällt und filtriert. In der Mutterlauge und dem 1. Waschfiltrat fällt eine 9,8 %ige $NaHCO_3$-Lösung ($NaHCO_3$ = $Na_2CO_3$ 1:1,5) an, die eine wirtschaftliche Aufarbeitung, wie in der vorliegenden Erfindung beschrieben, erlaubt.

In den folgenden Beispielen werden die anwendungstechnischen Eigenschaften der nach den in den Beispielen 1 - 3 beschriebenen Verfahren hergestellten Fällungskieselsäuren im Vergleich zu Marktprodukten näher erläutert.

Beispiel 4

Nach dem erfindungsgemäßen Verfahren lassen sich Fällungskieselsäurequalitäten mit großen Oberflächen und hohem Ölaufnahmevermögen herstellen.

Eigenschaften und Verwendung solcher Fällungskieselsäuren sowie die Methoden zu deren physikalisch-chemischer Charakterisierung sind von R. K. ller in "The Chemistry of Silica", J. Wiley & Sons, New York 1979, beschrieben worden.

Ein Vergleich typischer Kenndaten für Fällungskieselsäure zeigt Tabelle 1. Ultrasil VN 3 (DEGUSSA) und HiSil 223 (PPG) sind marktgängige verstärkende Kieselsäurefüllstoffe für Elastomere.

Tabelle 1

| Eigenschaften von Fällungskieselsäuren | | | |
|---|---|---|---|
| Kenndaten | Fällungskieselsäure n. erf.-gem. Verfahren | Ultrasil VN3 (DEGUSSA) | HiSil 223 (PPG) |
| BET-Oberfläche (m²/g) | 145 | 175 | 136 |
| CTAB-Zahl, pH = 9 (m²/g) | 117 | 173 | 149 |
| DBP-Aufnahme (g/100g) | 241 | 196 | 197 |
| pH-Wert | 6,8 | 6,9 | 6,7 |
| Trocknungsverlust (%) (2 h bei 120 °C) | 7,2 | 5,4 | 5,5 |
| Glühverlust (%) (2 h bei 1000 °C) | 5,1 | 5,0 | 5,7 |
| CTAB-Zahl: Methodenbeschreibung in DE-OS 34 30 931, S. 28f. DBP-Aufnahme: Die Aufnahme von Dibutylphthalat (DBP) wurde gemäß DIN 53 199 vorgenommen, indem anstelle von Rohleinöl bei der Bestimmung der Ölzahl DBP verwendet wurde. | | | |

Beispiel 5:

Die erfindungsgemäße Fällungskieselsäure wird in Kautschukmischungen ebenfalls als verstärkender Füllstoff eingesetzt. In Tabelle 2 sind die für eine Prüfmischung mit Naturkautschuk (Typ SMR 5 CV 60) ermittelten anwendungstechnischen Eigenschaften aufgelistet: M - 300 = Modul bei 300 % Dehnung, F = Zugfestigkeit, D = Dehnung, H = Härte).

Die Bestimmungsmethoden und die technische Bewertung für die genannten Größen sind u.a. von H. J. Bachmann et. al. in Rubber Chem. Technol. 32 (1959), 1286, sowie von G. Kraus in "Reinforcement of Elastomers" Interscience, New York 1965, beschrieben worden.

## Tabelle 2

Verstärkung von Kautschuk durch Fällungskieselsäuren

Rezepturbestandteile der Prüfmischung

| Naturkautschuk[+]         |        |
|---------------------------|--------|
| Typ SMR 5 CV 60           | 100    |
| Fällungskieselsäure       | 40     |
| ZnO Aktiv                 | 3      |
| Stearinsäure              | 2      |
| Schwefel                  | 2,5    |
| Vulkacit D[++]            | 2,25   |
| Vulkacit DM[++]           | 0,8    |

+) Fa. Nordmann u. Rassmann, Hamburg

++) Vulkanisationsbeschleuniger der Fa. DEGUSSA

| Fällungs-kieselsäure | M-300 (MPa) | F (MPa) | D (%) | H (° Shore A) |
|----------------------|-------------|---------|-------|----------------|
| Erfindungsgem. Fällungskiesel-säure | 6,0 | 20,6 | 595 | 65 |
| Ultrasil VN 3 | 4,9 | 22,5 | 659 | 65 |

Vulkanisation: 140 °C

12 min

**Ansprüche**

1. Verfahren zur Herstellung von Fällungskieselsäure aus verdünnten Wasserglaslösungen, wobei das Wasserglas durch Umsetzung von Sand mit einer basischen Alkalimetallverbindung erhalten worden ist, unter weitgehender Verwertung von Reststoffen aus verdünnten basischen Abwasserlaugen bei diesem Herstellungsverfahren, mittels Fällung durch ein Kohlendioxid enthaltendes Medium, Filtration, Filtrationswäsche, Trocknung und Abtrennung, dadurch gekennzeichnet, daß

das anfallende Alkalicarbonat und Alkalihydrogencarbonat enthaltende wäßrige Filtrat gesammelt, gegebenenfalls mit dem Alkalicarbonat und Alkalihydrogencarbonat enthaltenden wäßrigen Filtrat der ersten Wäsche des kieselsäurehaltigen Filterrückstands zu einem Gesamtfiltrat vereinigt wird, wobei der Gehalt an Alkalicarbonat und Alkalihydrogencarbonat, berechnet als Alkalihydrogencarbonat, 6 bis 12 Gew.-% beträgt, wobei dieses Filtrat teilweise nach Verdünnung und Umsetzung zu Alkalihydrogencarbonat in die Fällstufe zurückgeführt wird, während der Hauptanteil dieses Filtrates oder das Gesamtfiltrat in an sich bekannter Weise zu einer verdünnten wäßrigen Lösung der basischen Alkalimetallverbindung umgesetzt wird, die verdünnte, eine wäßrige Alkalimetallverbindung enthaltende Lösung daraufhin auf die für die Umsetzung mit Sand erforderliche Konzentration eingedampft, gegebenenfalls unter Kristallisation und Calcinierung, und schließlich die basische Alkalimetallverbindung in die Umsetzungsstufe zur Herstellung des Wasserglases zurückgeführt wird.

2. Verfahren nach Anspruch 1, dadurch gekennzeichnet, daß die Fällung der Kieselsäure, die Filtrationswäsche und Trocknung sowie die Aufarbeitung der Filtrate kontinuierlich durchgeführt werden.

3. Verfahren nach Anspruch 1, dadurch gekennzeichnet, daß es sich bei dem Kohlendioxid enthaltenden Medium um Rauchgas aus der Wasserglasherstellung handelt.

4. Verfahren nach Ansprüchen 1 bis 3, dadurch gekennzeichnet, daß der Gehalt an Alkalicarbonat und Alkalihydrogencarbonat, berechnet als Alkalihydrogencarbonat, im Filtrat oder Gesamtfiltrat 8 bis 11 Gew.-% beträgt.

5. Verfahren nach Ansprüchen 1 bis 4, dadurch gekennzeichnet, daß es sich bei der Alkalimetallverbindung um eine Natriumverbindung handelt.

6. Verfahren nach Ansprüchen 1 bis 5, dadurch gekennzeichnet, daß es sich bei der Alkalimetallverbindung um Natriumcarbonat handelt.

7. Verfahren nach Ansprüchen 1 bis 5, dadurch gekennzeichnet, daß es sich bei der Alkalimetallverbindung um Natriumhydroxid in Form von 35 %iger Natronlauge handelt.

8. Verwendung der nach Ansprüchen 1 bis 7 erhaltenen Kieselsäure als Füllstoff und Träger.

7

SODAKREISLAUF BEI DER THERMISCHEN WASSERGLAS-HERSTELLUNG

Abb.1    D 7884/1

EP 0 355 550 A2

NaOH- KREISLAUF BEI DER HYDROTHERMALEN WASSERGLAS-HERSTELLUNG

VERFAHREN I — Abb.2

NaOH (35%)

SAND

ROLLAUTOKLAV

CO$_2$

FÄLLUNG, FILTRATION
TROCKNUNG

SiO$_2$

Na$_2$CO$_3$ / NaHCO$_3$

CaO

KAUSTIFIZIERUNG
(KALK-LÖSCHEN)

KLÄRUNG

KALZINIERUNG

CaCO$_3$ – SCHLAMM
( 50 %)

NaOH ( 6,7 %)

CaCO$_3$
( 7,5 %)

FILTRATION

EINDAMPFUNG

H$_2$O

Na$_2$CO$_3$

FILTRATION

NaOH (35%)

NaOH
35 %